# EUROPEAN PATENT SPECIFICATION

(11) **EP 0 422 448 B1**
(45) Date of publication and mention of the grant of the patent: **29.11.1995**
(21) Application number: 90118501.7
(22) Date of filing: 26.09.1990
(51) Int. Cl.: G01N 21/59, G01N 21/64, G01N 21/05

(54) **Apparatus for measuring light absorbance or fluorescence in liquid samples**
Vorrichtung zum Messen der Lichtabsorption oder Fluoreszenz in flüssigen Proben
Appareil pour mesure d'absorption de lumière ou fluorescence en spécimens liquides

(30) Priority: 29.09.1989 US 414839
(43) Date of publication of application: 17.04.1991
(73) Proprietor: WATERS INVESTMENTS LIMITED, Wilmington, Delaware 19805 (US)
(72) Inventor: Gilby, Anthony C., Foxborough, Massachusetts 02035 (US)
(74) Representative: Henkel, Feiler, Hänzel & Partner

(56) References cited:
- EP-A- 0 201 824
- AT-B- 267 218
- US-A- 1 937 721
- US-A- 3 516 752
- US-A- 3 518 439
- US-A- 4 011 451

## Description

This invention relates to a photometric apparatus useful in liquid chromatography and, more particularly to such an apparatus which utilizes a sample cell and associated optic means which prevents light rays from impinging on the cell walls or prevents such impinged rays from impinging on downstream detection means.

In a liquid chromatography system, detection of sample constituents is effected by passing the eluent from a liquid chromatography column through a small volume sample cell, passing light through the sample cell and detecting the light emitted from the cell to determine characteristic light absorbance by the sample. It is known that substantial spurious radiation signals are generated by differences in refractive index of the sample and solvents flowing through the cell. These index differences produce complex lens-like effects which can cause a variable proportion of the rays passing through a small photometer cell to impinge on the walls. Since rays which encounter the cell walls are partially absorbed, refractive index variations cause the instrument baseline to be unstable, and sample absorbance values to be in error.

The size and shape of an absorption cell for a high performance liquid chromatograph (HPLC) UV-Visible detector is a compromise between the following three factors. First, it is important to pass a high light flux through the cell to achieve a high signal-to-noise-ratio measurement. Second, the cell volume must be kept low to prevent peak spreading and loss of chromatographic resolution. Third, for a given cell volume and optical throughput, the cell path-length should be as long as possible to maximize sample absorption. These factors lead to the typical dimensions of a conventional HPLC-UV-Vis absorption flow cell; 10 mm long, 1 mm diameter and about 8 micro liters volume. In processes wherein samples are caused to fluoresce and the amount of fluorescence is measured, light rays striking the cell walls also is a problem. This is due to the fact that there is some adsorbance of previously analyzed samples by the transparent cell walls which fluoresces when exposed to light rays and thereby causes spurious signals.

It has been proposed in U.S. Patents 4,011,451 and 4,276,475 to provide a flow-cell whereby the lens effect is rapidly dissipated by a progressive increase in the cross-sectional area of the flow-cell along the flow-path. The wall of the flow cell forms a diverging surface of rotation whereby the walls form an angle of divergence of several degrees with the axis of the cell. The optical system avoids any substantial radiation from entering the cell at sharp angles which could result in the radiation impinging on the walls of the cell. The divergence of the cell walls substantially dissipates the undesirable effect of the refractive index gradients encountered in HPLC separations. Angles of divergence between the axis of the flowpath and the wall of the cell of 1° to 3° are disclosed to be most advantageous.

While the tapered or conically shaped cells described in these two patents provide substantial advantages over the prior art, they have some disadvantages which would desirably be overcome. The required cell volume is undesirably increased as compared to a cylindrically shaped cell. Increased sample cell volume causes band spreading of the light passing through the sample cell. In addition, a conically shaped cell is more difficult to produce and therefore is more expensive than a cylindrically shaped cell having a constant circular cross-section. Therefore, it would be desirable to provide a means to effect liquid chromatography which permits minimizing sample cell volume and which avoids the need for a non-cylindrically shaped sample cell, while still preserving high optical throughput and insensitivity to refractive index changes.

From AT-B-267 218 there is known a photometric apparatus for measuring light absorbance in a liquid, in which as an optical system a combination of an aperture and a lens is utilized to prevent light rays from a light source from impinging on the wall of a sample cell comprising a bore having liquid inlet and outlet and being sealed at both ends with transparent windows. The optical system in this prior art apparatus is positioned ahead of the sample cell.

According to the present invention there is provided an apparatus for measuring light absorbance in a liquid as defined in claim 1.

The present invention is based on the discovery that by controlling the shape of the light beam passing through a sample cell, a sample cell having a cylindrically shaped bore having a constant circular cross-section, i.e. an uniform cross-section about a cell axis, can be employed while preventing any light striking the walls of the cell from impinging on a downstream photodetector. In this invention lenses are sealed directly to one or both of the entrance and the exit of the sample cell. The lens or lenses form a tapered light beam passing through the cell. In the preferred embodiment of the invention the cell is flooded with light, but the portion of the beam selected by the optical system diverges to just fill the cell at the exit end of the cell. Any portion of the light striking the cell walls is masked to prevent its impingement on a downstream photodetector. This embodiment is referred to herein as the "reverse taper beam cell".

### BRIEF DESCRIPTION OF THE DRAWINGS

Figure 1 is a schematic view of an apparatus employing a taper beam cell not forming part of this invention.

Figure 2 illustrates the light path for the taper beam cell.

Figure 3 illustrates the optical path through a prior art taper cell.

Figure 4 illustrates the light path through the reverse taper beam cell of this invention.

Figure 5 is a schematic of an apparatus employing the reverse taper beam cell.

The purpose of this invention is achieved when utilizing either the taper beam cell or the reverse taper beam cell. That is, light passing through a sample cell to be subsequently analyzed either does not impinge upon the cell wall (taper beam cell) or light fills the cell, but rays impinging on the cell walls are masked prior to striking the detector, (reverse taper beam cell).

In the taper beam cell embodiment which does not form part of the claimed invention but is described herein after for example, light from the central, hot-spot of a lamp such as a deuterium lamp, a tungsten halogen lamp or the like is focussed on the entrance of the cell so as to overfill the entrance of its cylindrical bore. A nominal magnification such as 2X or 3X is desirable. This ensures that light from the brightest part of the light source encompasses the desired portion of the area at the entrance of the cell, and that the source image will have a reasonably large depth of field near the cell entrance. The angular range of rays collected is well within the central maximum of the source. The light rays converge from the first focussing means to form an image of the source at the cell entrance. The cell entrance is the primary field stop of the system. The primary aperture stop is located near the first focussing means to define the shape of the light beam entering the cell. The first focussing means can be a lens, mirror or grating which may carry a mask to properly establish the aperture.

In the taper beam cell embodiment, the focussed light beam enters the cell through a first lens chosen to form an image of the primary aperture step near the exit window of the cell, when the cell is filled with liquid sample. The size of this image is smaller than the internal diameter of the cell so that, at the cell exit there is established a clearance between the inner diameter of the cell and the outer fringe of the beam which increases towards the cell exit. The clearance is designed to allow refractive index gradients, of the magnitude normally encountered in HPLC to bend the rays without the rays impinging on the cell walls. The first lens preferably is sealed to the cell entrance in place of the normally flat window. A detector may be located directly after the cell to intercept all of the rays leaving the cell, or additional optics including a lensed exit window of the cell may be employed, to transfer light to the detector.

The embodiment just described is a taper beam cell with the field stop of the optical system located at the entrance of the cell. This arrangement can be used in combination with a wavelength selecting filter usually, but not necessarily, located just before the oversize detector. A pair of taper beam cells can of course be used to effect a double beam absorbance detector. The taper beam cell is also an ideal arrangement when the cell is located, for example, after a wave-length-selecting grating spectrometer and the cell entrance aperture becomes the spectrometer exit slit. However, if it is desired to build an absorbance detector based on a photodiode array spectrograph, the cell must necessarily precede the spectograph. In this case, to use the cell entrance aperture as the spectrograph entrance slit results in the location of sample liquid, of varying refractive index, between the spectrograph slit and the grating. This undesirable situation, which leads to wavelength shifts and absorbance errors, is overcome in the second embodiment of the invention the reverse taper beam cell described below.

The taper beam cell is also useful in an analytical process wherein a sample is caused to fluoresce when exposed to light. Since the excitation light beam does not strike the cell walls, or contaminants on the cell walls, the cell wall will not fluoresce and spurious signals from the cell walls are eliminated. When the samples are analyzed as a function of fluorescence, the cell walls are transparent and the detector is positioned about 90° to the light path passing through the sample.

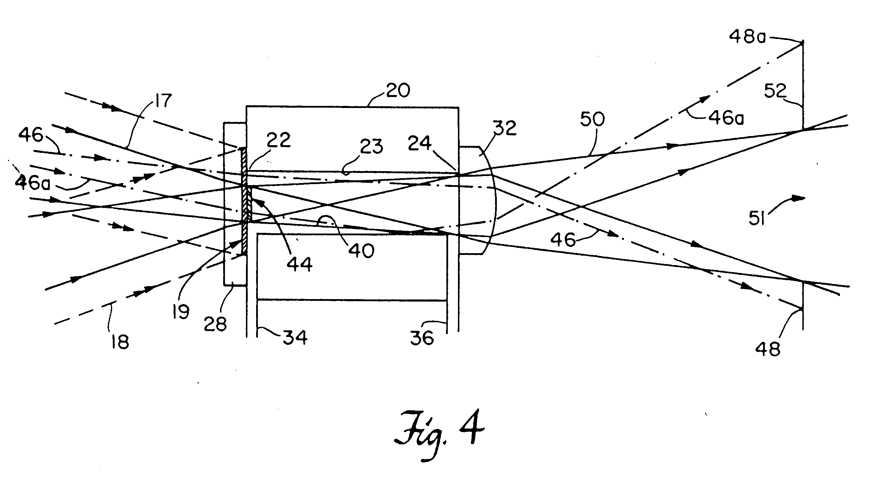

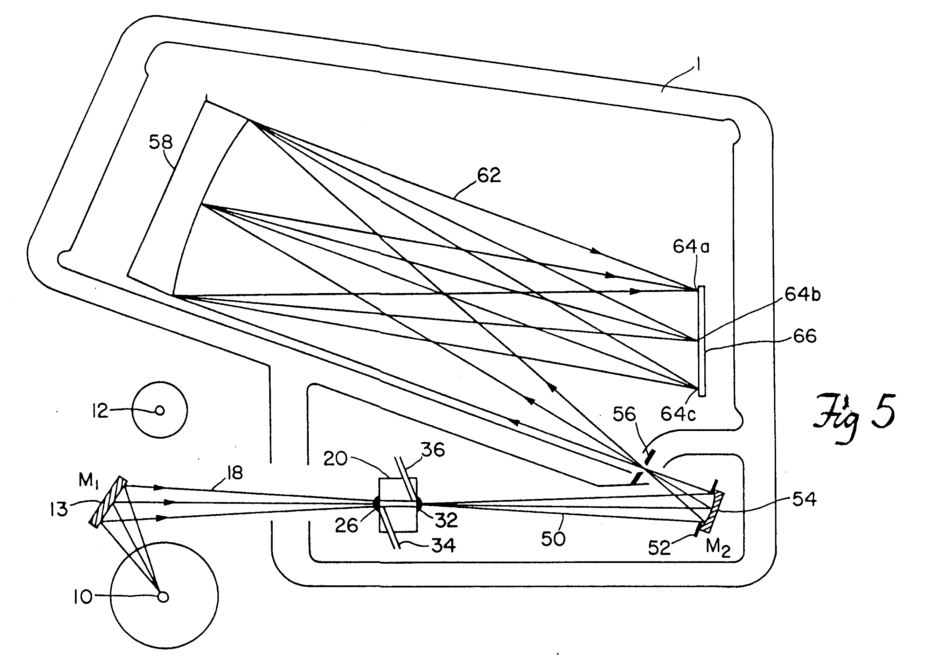

In the reverse taper beam cell embodiment, the primary aperature stop of the optical system is the exit of the flow cell bore, and the primary field stop is located after the cell. Fig. 5 discloses a photodiode array-based spectrograph for HPLC using a reverse taper beam cell. The primary field stop is located at mirror M2, which images the exit of the flow cell onto the slit of the spectrograph, the location of which image is unaffected by variations of refractive index in the sample cell. Alternatively, the exit aperture of the cell could be the entrance slit of the spectrograph, with the beam-limiting stop located on the grating. However, utilization of the mirror M2 allows the f/# of the cell to be matched to the f/# of the spectrograph, so optimizing the performance of the instrument. Fig. 4 shows detailed ray paths through the cell. A lens at the cell exit ensures that rays which impinge on the cell walls are blocked from reaching the spectrograph and detector by the field stop near M₂. The curvature of the lens is chosen to image a portion of the cell bore near the cell entrance, which is smaller than the cell internal diameter, to fill the field stop near mirror M2. If during the normal course of an HPLC separation, the refractive index in the cell changes, rays inside the cell will bend. However, the design's function is to ensure that rays which pass the two stops, at the cell exit and at M2, will be selected from the essentially uniform light which overfills the entrance of the cell, thus minimizing the effects of refractive index on baseline stability.

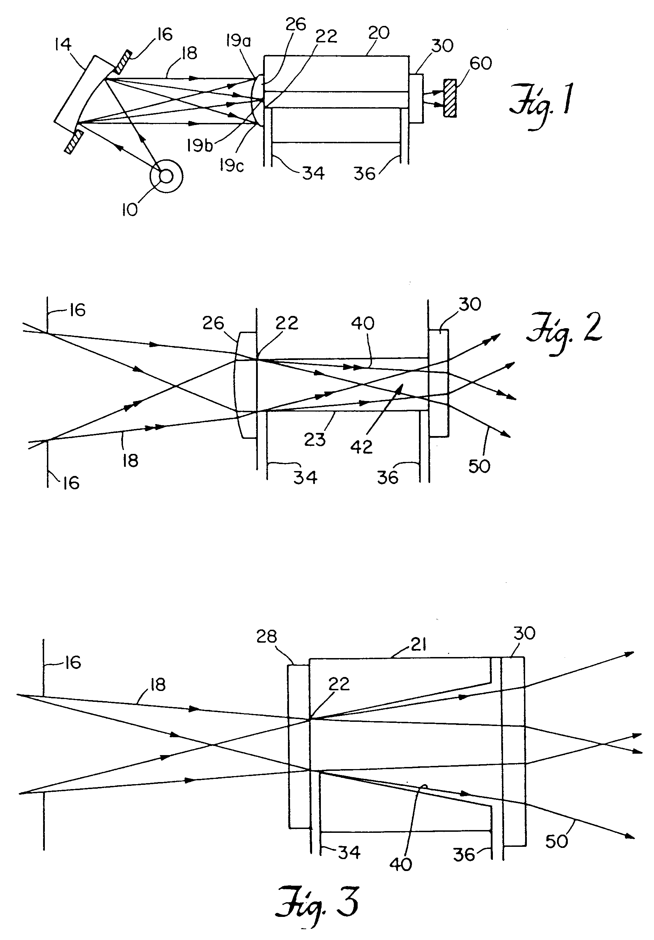

Referring to Figure 1, the apparatus is shown which is capable of effecting the taper beam cell. Fig. 2 shows the details of the light path through the cell. In the apparatus of Figure 1, a light source 10 emitting electromagnetic radiation over the wavelength range from the ultraviolet to near infrared (for example from at least 190 nm to 800 nm) is provided. A portion of the light emitted by the source 10 passes through aperture 16 to be intercepted by concave holographic grating 14 and dispersed and focussed as light beam 18 onto a plane through the entrance aperture 22 of cell 20. The source 10 has a small emitting area and functions as the entrance slit of the monochromator. Different wave-lengths are focussed at locations such as 19a, 19b and 19c. Rotation of grating 14 illuminates the cell entrance aperture 22 with a selected, approximately single wave-length, e.g., 19b so allowing sample absorbance at that wavelength to be measured. A reference beam and reference detector (not shown in Fig. 1) allow fluctuations in lamp output to be compensated. The focal length of cell entrance lens 26 is chosen to form an image of mask 16 at location 42 in the vicinity of the exit of the cell bore 23. Liquid sample from an HPLC passes through the cell via inlet and outlet ports 34 and 36. As shown in Fig. 2, the envelope 40 of rays traversing the cell bore 23 forms a decreasing taper so that refractive index inhomogeneities, common during gradient elution, may bend the rays, but not so much as to cause them to impinge on the cell internal diameter. The rays exit the cell through window 30, shown here as a plane window, forming a beam 50 which falls entirely within the sensitive area of the photodetector 60. Thus, all rays selected from the source emission by aperture stop 16 and field stop 22 reach the detector without impingement on the cell walls, independently of the sample stream refractive index fluctuations commonly experienced in HPLC.

Referring to Figure 3, an example of a prior art cell is shown for comparison. This so-called taper cell 21 (U.S. Patent 4,276,475) achieves the same objective of being insensitive to refractive index fluctuations in the sample cell, but at the expense of substantially increased sample volume, and higher manufacturing costs. A light beam 18 passes through window 28 into cell entrance 22 to form beam envelope 40 which exits through window 30 to form diverging beam 50. The absence of a lens at the cell entrance, allows the beam envelope 40 to diverge through the cell, however, since the cell bore also diverges, the beam envelope 40 does not strike the cell wall.

Figs 4 and 5 illustrate the reverse taper beam cell embodiment of this invention, implemented in a photodiode array absorbance detector. Light from either light source 10 or 12, selected to have maximum energy in complementary parts of the spectrum, is directed by rotatable off-axis ellipsoidal mirror 13 to form converging beam 18 and magnified source image 19 which overfills entrance aperture 22 of cell 20.

Lens 32 images cross-section 44 of portion 17 of beam 18, located near cell entrance aperture 22, to fill opening 51 in mask 52. Rays which pass through mask 52 are focussed on slit 56 by concave mirror 54. The demagnification of cell exit aperture 24 at slit 56 by mirror 54 is chosen so that concave holographic grating 58 is just filled with light. This maximizes the energy through the system at a given spectral resolution. The various wavelengths of diffracted beam 62 are brought to a focus on photodiode array 66 at locations such as 64a, 64b and 64c.

Cross-section 44 of beam portion 17 is smaller than the inside diameter of cell 20. When cell 20 contains a fluid of uniform refractive index, cross-section 44 is advantageously centered on the cell axis. Rays within the envelope of beam 18, such as 46 and 46a, which are not contained within the envelope 40 of rays between cross-section 44 and cell exit aperture 24, are absorbed at 48 and 48a by mask 52 and do not reach photodetector 66. When the refractive index of fluid in the cell changes, as for example during an HPLC gradient separation, rays passing through the cell will bend by refraction and the exact location of cross-section 44 will change, but under normal circumstances will remain within the inside diameter 23 of cell 20. Thus, only rays which stay within envelope 40 contribute to the measured spectrum. Ray envelope 40 is a diverging taper which does not contact the inside surface of the cell, hence the name reverse taper-beam cell.

In Fig. 4, cell entrance window 28 is shown as a plane window. An entrance lens is not essential to the functioning of the reverse taper beam cell invention, although it may improve the performance of the optical system as a whole, by reducing the size of mirror 13, as shown in Fig. 5.

## Claims

1. Apparatus for measuring light absorbance in a liquid which comprises:
(a) a sample cell (20) comprising a bore (23) of uniform cross-section about a cell axis and having a liquid inlet (34) and a liquid outlet (36);
(b) a window (28) positioned at a first end (22) of said cell;
(c) a lens (32) positioned after a second end (24) of said cell;
(d) a light source (10 or 12) positioned to direct light along said cell axis through said window, said cell and said lens;
(e) means (13) to overfill said window (28) with light rays from said source;
(f) an aperature (52) positioned after said lens (32); and
(g) a light detector (66) capable of measuring optical power passing through said aperture (52), said lens (32) having a shape such that light rays which exit said cell (20) and fall within said aperature have not interacted with the walls of said cell and are selected from light rays entering the cell so as to render an absorbance measurement with said detector insensitive to changes in liquid refractive index.

2. The apparatus of claim 1 wherein said lens (32) is positioned at the second end (24) of the cell.

3. The apparatus of claim 1 wherein said detector (66) is a photodiode array.

## Patentansprüche

1. Vorrichtung zum Messen der Lichtabsorption in einer Flüssigkeit, umfassend:
(a) eine Probenzelle (20) mit einer Bohrung (23) eines gleichmäßigen Querschnitts um eine Zellenachse und mit einem Flüssigkeitseinlaß (34) und einem Flüssigkeitsauslaß (36),
(b) ein an einem ersten Ende (22) der Zelle angeordnetes Fenster (28),
(c) eine nach bzw. hinter einem zweiten Ende (24) der Zelle angeordnete Linse (32),
(d) eine Lichtquelle (10 oder 12), die angeordnet ist zum Richten von Licht längs der Zellenachse durch das Fenster, die Zelle und die Linse,
(e) eine Mittel (13) zum Überausleuchten des Fensters (28) mit Lichtstrahlen von der (Licht-)Quelle,
(f) eine der Linse (32) nachgeschaltete Apertur oder Blende (52) und
(g) einen Lichtdetektor (66), welcher die die Apertur oder Blende (52) passierende optische Leistung zu messen vermag, wobei die Linse (32) eine solche Form aufweist, daß Lichtstrahlen, die aus der Zelle (20) austreten und in die Apertur oder Blende einfallen, nicht mit den Wänden der Zelle in Wechselwirkung getreten und aus in die Zelle eintretenden Lichtstrahlen selektiert sind, um eine Absorptionsmessung mittels des Detektors für Änderungen im Brechungsindex der Flüssigkeit unempfindlich zu machen.

2. Vorrichtung nach Anspruch 1, wobei die Linse (32) am zweiten Ende (24) der Zelle angeordnet ist.

3. Vorrichtung nach Anspruch 1, wobei der Detektor (66) ein(e) Photodiodenarray bzw. -anordnung ist.

## Revendications

1. Appareil pour mesurer l'absorption de lumière dans un liquide, qui comporte :
a) une cellule échantillon (20) comportant un alésage (23) de section droite uniforme autour d'un axe de cellule et présentant une entrée de liquide (34) et une sortie de liquide (36) ;
b) une fenêtre (28) placée à une première extrémité (22) de ladite cellule ;
c) une lentille (32) placée après une seconde extrémité (24) de ladite cellule ;
d) une source de lumière (10 ou 12) placée pour diriger la lumière le long dudit axe de cellule à travers ladite fenêtre, ladite cellule et ladite lentille ;
e) des moyens (13) pour inonder ladite fenêtre (28) avec les rayons lumineux provenant de ladite source ;
f) une ouverture (52) située après ladite lentille (32) ; et
g) un détecteur de lumière (66) capable de mesurer la puissance optique traversant ladite ouverture (52), ladite lentille (32) ayant une forme telle que les rayons lumineux qui sortent de ladite cellule (20) et tombent dans ladite ouverture n'ont pas interagi avec les parois de ladite cellule et sont choisis parmi les rayons lumineux pénétrant dans la cellule de manière à rendre une mesure d'absorption à l'aide dudit détecteur insensible aux variations de l'indice de réfraction du liquide.

2. L'appareil de la revendication 1, dans lequel ladite lentille (32) est placée à la seconde extrémité (24) de la cellule.

3. L'appareil de la revendication 1, dans lequel ledit détecteur (66) est une batterie de photodiodes.
